# EUROPÄISCHE PATENTSCHRIFT

(11) **EP 3 932 171 B1**
(45) Veröffentlichungstag und Bekanntmachung des Hinweises auf die Patenterteilung: **12.06.2024**
(21) Anmeldenummer: 21183210.0
(22) Anmeldetag: 01.07.2021
(51) Int. Cl.: A01D 34/835, A01D 33/06, A01D 34/66

(54) **KRAUTTRENNVORRICHTUNG**
WEED SEPARATION DEVICE
DISPOSITIF DE SÉPARATION D'HERBE

(30) Priorität: 03.07.2020 DE 102020117685
(43) Veröffentlichungstag der Anmeldung: 05.01.2022
(73) Patentinhaber: Grimme Landmaschinenfabrik GmbH & Co. KG, 49401 Damme (DE)
(72) Erfinder: WIESCHMANN, Jens, 49434 Neuenkirchen-Vörden (DE); EVELGÜNNE, Ralf, 48282 Emsdetten (DE); WISCHMEYER, Michael, 49179 Ostercappeln (DE); VOGT, Matthias, 49448 Hüde (DE)
(74) Vertreter: Wischmeyer, André

(56) Entgegenhaltungen:
- AT-B- 389 031
- CN-A- 110 402 678
- DE-A1- 2 626 797
- DE-U1-202010 003 067
- ES-A1- 2 321 361
- US-A1- 2008 314 014

## Beschreibung

Die Erfindung betrifft eine Krauttrennvorrichtung zum Abtrennen von Kraut von Nutzpflanzen wie z.B. Speisezwiebeln. Die Krauttrennvorrichtung umfasst eine erste Rotationsvorrichtung. Die erste Rotationsvorrichtung ist zu einer Rotation um eine erste Rotationsachse ausgebildet. Außerdem weist die erste Rotationsvorrichtung zumindest ein im Betrieb in einer zur ersten Rotationsachse orthogonalen ersten Schnittebene rotierendes Trennelement auf. Die Krauttrennvorrichtung umfasst weiterhin zumindest eine zur ersten Rotationsvorrichtung benachbart angeordnete zweite Rotationsvorrichtung. Die zweite Rotationsvorrichtung ist zu einer Rotation um eine zweite Rotationsachse ausgebildet. Die zweite Rotationsachse weist zumindest ein im Betrieb rotierendes Trennelement auf. Die Krauttrennvorrichtung umfasst weiterhin einen sich an den Rotationsachsen entlang in eine horizontale Abführrichtung erstreckenden Abführkanal zur Abführung des Krauts. Der Abführkanal ist durch ein Oberleitelement nach oben hin begrenzt.

Eine derartige Krauttrennvorrichtung (siehe US 2008/314014 A1) wird im Betrieb über die Nutzpflanzenkultur hinwegbewegt. Die dabei rotierenden Trennelemente trennen zumindest einen Teil des Krauts von übrigen Nutzpflanzenbestandteilen, insbesondere von den Früchten der Nutzpflanzen. Anschließend wird das abgetrennte Kraut durch den Abführkanal in die Abführrichtung abgeführt, um die Früchte in einem folgenden Arbeitsgang möglichst frei von Kraut ernten zu können.

Nachteilig bei den bekannten Krauttrennvorrichtungen ist deren hoher Leistungsbedarf sowie deren mangelhafte Krautabführung insofern, als ein Teil davon sich bei größerer Krautmenge auf den zu erntenden Früchten ablagert.

Aufgabe der vorliegenden Erfindung ist die Bereitstellung einer gattungsgemäßen Trennvorrichtung, deren Abführkapazität bei möglichst geringem konstruktivem Aufwand erhöht ist.

Erfindungsgemäß wird die Aufgabe dadurch gelöst, dass der Abstand des Oberleitelementes von der Schnittebene mit der Erstreckung des Abführkanals in die Abführrichtung zumindest abschnittweise zunimmt.

Die erfindungsgemäße Krauttrennvorrichtung ist insbesondere zu einer Anwendung bei Speisezwiebeln, Kartoffeln und/oder weiteren Nutzpflanzen ausgelegt. Durch den Abführkanal wird das von den Trennelementen abgetrennte Kraut im Betrieb bevorzugt seitlich von den Nutzpflanzen weggeführt und anschließend in Fahrgassen, sich in Fahrtrichtung erstreckenden Streifen, innerhalb derer keine Nutzpflanzen angebaut sind, abgelegt. Die Krauttrennvorrichtung ist insbesondere zur Kopplung mit einem Träger- bzw. Antriebsfahrzeug wie einem Traktor ausgebildet, von dem es im Betrieb über die Nutzpflanzen fortbewegt wird.

Die Rotationsvorrichtungen sind insbesondere Schneidrotoren. Dazu haben die Trennelemente bevorzugt zumindest eine Schneide, mit der sie auf das Kraut einwirken. Bevorzugt umfasst zumindest die erste Rotationsvorrichtung zumindest zwei Trennelemente. Die zweite Rotationsvorrichtung hat insbesondere einen Radius, der mit dem der ersten Rotationsvorrichtung übereinstimmt, besonders bevorzugt sind die erste Rotationsvorrichtung und die zweite Rotationsvorrichtung baugleich. Vorzugsweise umfasst die Krauttrennvorrichtung eine dritte Rotationsvorrichtung, die insbesondere baugleich zur ersten Rotationsvorrichtung ausgebildet ist.

Die Trennelemente haben im Betrieb insbesondere eine Umfangsgeschwindigkeit von zumindest im Wesentlichen 90 m/s. Dabei haben die Trennelemente bevorzugt einen Radius von zumindest im Wesentlichen 300 mm oder 375 mm. Dadurch wird im Abführkanal eine Strömungsgeschwindigkeit von bis zu 70 m/s erreicht. Die Trennelemente sind insbesondere zu einem Schneiden des Krauts 5 bis 10 cm oberhalb der Bodenoberfläche bzw. der Frucht ausgebildet.

Die Trennelemente der Rotationsvorrichtungen sind insbesondere lösbar an einem jeweiligen Rotorantriebsteil der Rotationsvorrichtungen befestigt. Die Trennelemente sind insbesondere baugleich. Die Trennelemente sind bevorzugt und ausgehend von ihrem Befestigungspunkt zur Schnittebene hin abgekröpft, um zu verhindern, dass verbleibende Nutzpflanzenteile auf das Rotorantriebsteil einwirken. Die Trennelemente umfassen bevorzugt jeweils einen sich entgegen der Umlaufrichtung an die Schneide anschließendes und sich von der Schneide aus nach oben erstreckenden Leitabschnitt, um eine anteilig nach oben gerichtete Luftströmung zur Förderung des abgetrennten Krauts zu realisieren.

Die Rotationsachsen der beiden Rotationsvorrichtungen, insbesondere aller Rotationsvorrichtungen, sind vorzugsweise parallel zueinander angeordnet. Das zumindest eine Trennelement der zweiten Rotationsvorrichtung rotiert im Betrieb insbesondere ebenso wie das zumindest eine Trennelement der ersten Rotationsvorrichtung in der Schnittebene. Insbesondere rotieren im Betrieb sämtliche Trennelemente in der Schnittebene und/oder sind sämtliche Rotationsachsen parallel zueinander angeordnet. Die Schnittebene ist im bestimmungsmäßigen Betrieb bevorzugt horizontal angeordnet.

Die erste Rotationsvorrichtung und die zweite Rotationsvorrichtung sind insofern benachbart, als sich im Betrieb kein weiteres das Kraut durch Rotation abtrennendes Element befindet. Die Trennelemente sind bevorzugt eingehaust, wobei die Rotationsachsen durch Rotationsräume hindurch verlaufen, die zum Abführkanal vorzugsweise offen sind. Die Trennelemente ragen im Betrieb insbesondere zeitweise in den Abführkanal hinein. Bevorzugt ist der Abführkanal in Fahrtrichtung vor den Rotationsachsen angeordnet und/oder gegenüberliegend von der Koppeleinrichtung, insbesondere einer Dreipunktaufnahme, angeordnet. Dadurch findet der Schneidvorgang der Trennelemente bereits in oder unterhalb des Abführkanals statt. Die Krauttrennvorrichtung weist bevorzugt mindestens drei, besonders bevorzugt genau drei Rotationsvorrichtungen auf.

Der Abführkanal erstreckt sich insofern an den Rotationsachsen entlang, als er sie nicht schneidet. Bevorzugt grenzt der Abführkanal an die Rotationsachsen oder ist von den Rotationsachsen beabstandet. Die Abführrichtung ist bevorzugt relativ zur Fahrtrichtung angewinkelt. Besonders bevorzugt ist eine Rotationsachsenebene, innerhalb derer zumindest zwei Rotationsachsen angeordnet sind, parallel zur Abführrichtung angeordnet. Die Abführrichtung ist vorzugsweise parallel zu zumindest einem den Abführkanal umgrenzenden Kanalelement angeordnet.

Der Abführkanal ist insbesondere durch eine Mehrzahl von Leitelementen ausgebildet, die ihn insbesondere zumindest abschnittsweise U-förmig umgrenzen. Nach unten hin, d.h. zur Schnittebene hin bzw. im Betrieb zum Erdboden hin ist der Abführkanal vorzugsweise offen. Das Oberleitelement ist dasjenige Leitelement des Abführkanals, welches zumindest einen Teil des Abführkanals, insbesondere über eine überwiegende Länge dessen, nach oben hin begrenzt. Das Oberleitelement ist insbesondere dasjenige Leitelement des Abführkanals, dessen Abstand von der Schnittebene zumindest in die Abführrichtung betrachtet und verglichen mit übrigen Leitelementen am größten ist.

Der Abstand des Oberleitelementes von der Schnittebene nimmt in die Abführrichtung bevorzugt allmählich und/oder kontinuierlich oder gestuft zu. Insbesondere nimmt der Abstand einer der Schnittebene zugewandten Unterseite des Oberleitelementes von der Schnittebene mit der Erstreckung des Abführkanals in die Abführrichtung zumindest abschnittsweise zu. Insbesondere erstreckt sich das Oberleitelement bei einer Betrachtung der Krauttrennvorrichtung in Fahrtrichtung zu einer Seite ansteigend. Vorzugsweise nimmt somit die Höhe des Abführkanals mit seiner Erstreckung in die Abführrichtung zu.

Durch die erfindungsgemäße Ausführung der Krauttrennvorrichtung nimmt die Höhe des Abführkanals entlang der Rotationsachsen zu und verändert sich somit der Kanalquerschnitt des Abführkanals entlang der Rotationsachsen. Dabei kann die durch die Trennelemente erzeugte Luftströmung jeden Teil des Abführkanals im Wesentlichen gleich gut erreichen und werden bezogen auf eine zur Schnittebene parallele Richtung weit von den Trennelementen beabstandete Abführkanalbereiche, in denen sich nur ein unzureichender Luftstrom realisieren ließe, vermieden.

Im Betrieb trennt eine stromaufwärts gelegene Rotationsvorrichtung Kraut ab und führt es einem ersten Abführkanalbereich zu, in dem das Oberleitelement noch einen geringeren Abstand von der Schnittebene hat. Außerdem erzeugt diese Rotationsvorrichtung dabei einen anteilig aufwärts und anteilig in die Abführrichtung gerichteten Luftstrom, durch welchen das Kraut von der Rotationsvorrichtung abgeführt wird. Aufgrund der geringen Höhe des Abführkanals erzeugt bereits die eine Rotationsvorrichtung hier einen zur Abführung hinreichenden Luftstrom. Eine weitere, stromabwärts gelegene Rotationsvorrichtung erzeugt ebenso einen vorbeschriebenen Luftstrom, durch den auch das von dieser weiteren Rotationsvorrichtung abgetrennte Kraut abgeführt wird. Um ab der weiteren Rotationsvorrichtung das gesamte Kraut abführen zu können, ist vorzugsweise zumindest hier der Abstand des Oberleitelementes von der Schnittebene bereits größer. Die Variation des Kanalquerschnitts durch eine Vergrößerung des Abstandes zwischen Schnittebene und Oberleitelement führt zu einer laminaren Strömung, die sämtliche Krautbestandteile bei nur geringen Verlusten zuverlässig in die Abführrichtung abführt. Durch diese Ausbildung lassen sich besonders große Mengen von Kraut auch bei größeren Fahrtgeschwindigkeiten rückstandslos abführen.

Der Abstand der Oberleitelementes von der Schnittebene nimmt bevorzugt zumindest über eine Abführstrecke, die dem Abstand der Rotationsachsen der äußersten Rotationsvorrichtungen entspricht, ununterbrochen zu. Das betrifft wiederum insbesondere den Abstand der Unterseite des Oberleitelementes von der Schnittebene. Stabilisierungselemente wie etwa durch den Abführkanal verlaufene Streben, denen bei der Luftstromführung keine maßgebliche Relevanz zukommen, bleiben hierbei insbesondere außer Betracht. Durch die ununterbrochene Zunahme über die Abführstrecke werden Turbulenzen in der Strömung besonders zuverlässig vermieden.

Vorzugsweise nimmt der Abstand der Oberleitelementes bzw. von dessen Unterseite von der Schnittebene zumindest Abschnittsweise, insbesondere über die gesamte Abführstrecke zumindest im Wesentlichen linear zu. Hierdurch wird der vorbeschrieben Vorteil weiter verstärkt und ist eine konstruktiv einfache Lösung des Problems gegeben. Der Abstand des Oberleitelementes von der Schnittebene variiert in die Abführrichtung bzw. über die Abführstrecke bevorzugt um zumindest 150 mm, besonders bevorzugt um zumindest 200 mm. Es hat sich gezeigt, dass ab diesen Werten die insbesondere im Betrieb der Krauttrennvorrichtung in Zwiebelkulturen besonders gute Strömungsbedingungen vorliegen.

In einer vorteilhaften Ausgestaltung der Erfindung ist die Unterseite des Oberleitelementes bei einer Betrachtung dessen in die Abführrichtung über zumindest die Hälfte einer orthogonal zur Abführrichtung und horizontal gemessenen Breite des Abführkanals gradlinig ausgebildet. Insbesondere verläuft die Unterseite bei dieser Betrachtung parallel zur Schnittebene. Hierdurch wird erreicht, dass der Abführkanal oberseitig noch eine verhältnismäßig große Breite hat und sich nicht etwa stark verjüngt. Dadurch lässt sich ein großer Abführquerschnitt erreichen ohne dass der Abführkanal dazu eine die Sicht des Fahrers der Zugmaschine beeinträchtigende Höhe haben muss. Auch kommt diese Ausgestaltung der Unterseite und das damit einhergehende geringe Verhältnis von Abführkanalinnenfläche zu Abführkanalvolumen einer Verringerung der Strömungsverluste entgegen.

Bevorzugt ist der Abführkanal in Fahrtrichtung durch ein Frontleitelement begrenzt, dessen Abstand von einer Rotationsachsenebene zumindest im Wesentlichen konstant ist. In der Rotationsachsenebene liegen die Rotationsachsen von zumindest zwei der Rotationsvorrichtungen, insbesondere die Rotationsachsen sämtlicher Rotationsvorrichtungen. Das Frontleitelement erstreckt sich bevorzugt über die gesamte Abführstrecke und/oder im Wesentlichen parallel zur Rotationsachsenebene. Das Frontleitelement weist insbesondere eine sich im Betrieb von oben in Richtung des Bodens erstreckende nachgiebige Gummilippe auf, die von der Schnittebene vorzugsweise geschnitten wird. Durch den konstanten Abstand und insbesondere die weitere vorbeschriebene Ausbildung des Frontleitelementes sind insofern die Strömungseigenschaften verbessert, als ein Abführkanalbereich verhindert wird, in welchem aufgrund eines größeren horizontalen Abstandes von den Rotationsvorrichtungen signifikant geringere Strömungsgeschwindigkeiten herrschen. Alternativ ist das Frontleitelement bevorzugt derart ausgebildet, dass sein Abstand von der Rotationsachsenebene in die Abführrichtung zumindest abschnittsweise, insbesondere gleichmäßig zunimmt. Vorteil dieser Ausbildung ist eine Anpassung des Abführkanalquerschnittes an die entlang der Abführrichtung wachsende Menge zu fördernden Krauts.

Vorzugsweise beträgt der Abstand zwischen dem Frontleitelement und zumindest einem der Trennelemente in einer Position des Trennelementes, in der es dem Frontleitelement am nächsten ist, mindestens 50 mm, bevorzugt mindestens 70 mm. Durch diesen insbesondere quer zur Abführrichtung gemessenen Abstand wird es im Betrieb dem zu schneidenden kraut ermöglicht, sich, nachdem es vom Frontleitelement heruntergedrückt wurde, teilweise bereits in den Abführkanal hinein aufzurichten, bevor es geschnitten wird. Dadurch wird die sich anschließende Abführung erleichtert.

Vorzugsweise weist die Krauttrennvorrichtung ein separates, d.h. nicht von den Rotationsvorrichtungen umfasstes, Gebläse auf. Dieses Gebläse ist insbesondere zu einer Beschleunigung des Luftstroms in dem Abführkanal ausgebildet, alternativ oder zusätzlich zur Beschleunigung des Luftstroms durch die Rotationsvorrichtungen. Hierdurch lassen sich höhere Strömungsgeschwindigkeiten im Abführkanal realisieren.

Die Trennvorrichtung weist vorzugsweise ein Abdeckelement auf, das derart angeordnet ist, dass es zumindest die Rotationsachse einer Rotationsvorrichtung, insbesondere die Rotationsachsen sämtlicher Rotationsvorrichtungen, schneidet der zumindest abschnittsweise, insbesondere vollständig, umgibt. Das Abdeckelement hat zur Schnittebene einen geringeren Abstand als zumindest ein Teil des Oberleitelementes. Insbesondere hat das Abdeckelement zur Schnittebene einen geringen Abstand als das gesamte Oberleitelement. Das Abdeckelement bzw. dessen Unterseite hat insbesondere eine zur Schnittebene parallele Erstreckung und überdeckt in einer Draufsicht zumindest einen Teil der Bewegungsbahnen zumindest eines der Trennelemente. Die Rotationsvorrichtung bzw. die Rotationsvorrichtungen erstreckten sich bevorzugt durch das Abdeckelement hindurch oder sind alternativ vollständig unterhalb der Abdeckvorrichtung angeordnet. Ein parallel zur zugehörigen Rotationsachse gemessener Abstand zwischen dem Trennelement und dem Abdeckelement beträgt bevorzugt zumindest etwa 150 mm und/oder höchstens etwa 500 mm. Durch das im Betrieb im Gegensatz zum Oberleitelement flachere Abdeckelement werden unbeabsichtigte verlustbehaftete Strömungen, insbesondere Luftwirbel, außerhalb des Abführkanals verhindert.

Zugunsten optimaler Strömungsverhältnisse ist der Abstand des genannten Teils des Oberleitelementes von der Schnittebene um vorzugsweise um mindestens 200 mm, bevorzugt um mindestens 350 mm, besonders bevorzugt um mindestens 500 mm und/oder höchstens 2.000 mm größer als der Abstand des Abdeckelementes von der Schnittebene.

Bevorzugt ist der Abführkanal derart ausgebildet, dass sein bezogen auf eine vertikale Richtung oberhalb der Unterseite des Abdeckelementes angeordnete und in die Abführrichtung betrachteter Querschnitt auf Höhe der in Abführrichtung ersten Rotationsachse 25.000 mm² beträgt und auf Höhe jeder in Abführrichtung folgenden Rotationsachse einen um weitere 25.000 mm² vergrößerten Querschnitt hat. Der bezogen auf die vertikale Richtung oberhalb der Unterseite des Abdeckelementes gelegene Teil des Abführkanals hat bevorzugt einen entlang der Abführrichtung konstanten Anstand von der Rotationsachsenebene. Dieser Abstand beträgt bevorzugt mindestens ein Viertel des Radius zumindest einer Rotationsvorrichtung und vorzugsweise höchstens die Hälfte des Radius.

Der Abführkanal, insbesondere sein vorbeschriebener Teil hat eine orthogonal zur Abführrichtung und parallel zur Schnittebene gemessene Breite von insbesondere mindestens 200 mm, bevorzugt von mindestens 250 mm, besonders bevorzugt von mindestens 300 mm. Vorzugsweise ist die Breite entlang der Abführrichtung konstant. Vorzugsweise beträgt die Breite maximal 1.000 mm. Bei diesem Größenbereich hat sich gezeigt, dass durch die Trennelemente ein hinreichend homogener Luftstrom zum Abführen des Krauts zu erzeugen ist. Eine konstante Breite kommt wiederum der gewünschten laminaren Strömungen entgegen.

Vorzugsweise hat die Krauttrennvorrichtung ein insbesondere über die gesamte Abführstrecke zwischen dem Oberleitelement und dem Abdeckelement angeordnetes und den Abführkanal mit ausbildendes Verbindungselement. Das Verbindungselement oder dessen Unterseite erstreckt sich vorzugsweise zumindest abschnittsweise um < 90°, bevorzugt zwischen 45° und 89°, besonders bevorzugt zwischen 60° und 80°, mit Vorteil genau 70°, angewinkelt zum Abdeckelement bzw. dessen Unterseite und /oder zur Schnittebene. Sowohl zwischen dem Verbindungselement und dem Oberleitelement als auch zwischen dem Verbindungselement du dem Abdeckelement existiert somit bevorzugt ein stumpfer Winkel. Mit der Höhe des Abführkanals nimmt bevorzugt auch die Höhe des Verbindungsleitelementes in die Abführrichtung zu. Der Abstand des Verbindungsleitelementes bleibt mit seiner Erstreckung in die Abführrichtung bevorzugt konstant. Die Breite des Oberleitelementes wird mit seiner Erstreckung in die Abführrichtung vorzugsweise geringer. Durch die geneigte Anordnung des Verbindungsleitelementes relativ zum Abdeckelement wird vorzugsweise der durch das Verbindungsleitelement umgrenzte Teil des Abführkanals nach oben hin schmaler. Durch das so ausgebildete Verbindungsleitelement wird ein Anhaften von Kraut zwischen dem Oberleitelement und dem Abdeckelement verhindert und eine möglichst laminare Strömung erreicht.

Zumindest eine der Rotationsvorrichtungen ist eine zwischen dem Abdeckelement und der Schnittebene angeordnete und sich mit zumindest im Wesentlichen konstantem Abstand zur Rotationsachse der Rotationsvorrichtung, insbesondere um zumindest 180°, um die Rotationsachse erstreckende Rotationsleitanordnung zugeordnet. Besonders bevorzugt reicht die Rotationsleitanordnung in vertikaler Richtung von dem Abdeckelement aus über die Schnittebene hinaus und erstreckt sich in Umlaufrichtung des Trennelementes zum Auswurfkanal. Die Rotationsleitanordnung ist bevorzugt zumindest überwiegend zusammengesetzt aus im Wesentlichen ebenen Leitelementen. Die Rotationsleitanordnung ist bevorzugt an einer von dem Abführkanal abgewandten Seite der Rotationsebene angeordnet. Das zumindest eine Trennelement der Rotationsvorrichtung verläuft während seiner Rotation nah und mit im Wesentlichen konstantem Abstand an der Rotationsleitanordnung entlang. Hierdurch werden verlustbehaftete Luftverwirbelungen außerhalb des Abführkanals weiter vermieden.

Zumindest einer der Rotationsvorrichtungen ist in einer vorteilhaften Ausgestaltung der Erfindung ein in den Abführkanal mündender Zuführkanal zugeordnet. Der Zuführkanal ist von einem zumindest anteilig um die Rotationsachse der Rotationsvorrichtung umlaufenden Spiralleitelement zumindest mitausgebildet. Der Abstand des Spiralleitelementes von der Schnittebene nimmt zum Abführkanal hin bevorzugt zumindest abschnittsweise zu. Zusätzlich zum Spiralleitelement wird der Zuführkanal bevorzugt durch ein inneres und/oder äußeres Seitenleitelement mit ausgebildet, dessen Abstand zur Rotationsachse zumindest abschnittsweise konstant ist und das sich parallel zur Rotationsachse erstreckt. Der Zuführkanal erstreckt sich insbesondere um zumindest 90°, bevorzugt um zumindest 180°, besonders bevorzugt um zumindest 270° um die Rotationsachse. Das Spiralleitelement bzw. dessen Unterseite ist bei einem Schnitt durch die Rotationsachse im Wesentlichen gradlinig ausgebildet. Der Zuführkanal ist optisch im Wesentlichen auf das Abdeckelement aufgesetzt, um die Zuführung von unterhalb des Abdeckelementes von dem zumindest einen Trennelement geschnittenen Krauts zum Abführkanal zu erleichtern. Vorzugsweise ist jeder Rotationsvorrichtung ein Zuführkanal zugeordnet.

Vorzugsweise weist die Krauttrennvorrichtung einen sich an den Abführkanal anschließenden und eine Auswurföffnung aufweisenden Umlenkkanal auf. Der Umlenkkanal ist bevorzugt derart zur Umlenkung eines Kanalstroms ausgebildet, dass eine horizontale Auswurfrichtung relativ zur Abführrichtung um zumindest 45°, besonders bevorzugt um zumindest 55° angewinkelt ist und der Fahrtrichtung bevorzugt entgegengesetzt ist. Der Umlenkkanal schließt sich in die Abführrichtung des Abführkanals an letzteren an und ändert stromabwärts die Strömungsrichtung. Durch den Umlenkkanal wird verhindert, dass das abgeführte Kraut in die Abführrichtung aus der Krauttrennvorrichtung hinaus und damit auf benachbarte Nutzpflanzen, von denen Kraut ggf. schon entfernt ist, strömen. Der Umlenkkanal stellt sicher, dass das abgeführte Kraut unmittelbar seitlich von der bearbeiteten Nutzpflanzenbahn, insbesondere in einer sogenannten Fahrgasse, abgelegt wird.

Der Umlenkkanal ist auf einer von den Rotationsachsen abgewandten Seite durch zumindest ein höhenverstellbares Umlenkelement zumindest mitausgebildet. Das Umlenkelement ist vorzugsweise derart höhenverstellbar, dass es an einer Parallelführung angeordnet ist, durch die Höhe des Umlenkelementes translatorisch änderbar ist. Durch die Höhenverstellung lässt sich variieren, wie weit das abgetrennte Kraut seitlich ausgeworfen wird und somit je nach Nutzpflanzenbestand ein optimaler Auswurf des Krauts realisieren.

Alternativ oder zusätzlich ist das Umlenkelement zumindest anteilig, insbesondere ausschließlich, parallel zur Schnittebene verschieblich angeordnet. Insbesondere ist das Umlenkelement dabei in eine zur Fahrtrichtung angewinkelte, vorzugsweise rechtwinklige und bevorzugt horizontale Richtung verschieblich. Hierdurch ist insbesondere die Breite der Krauttrennvorrichtung variabel und lässt sich einfach einstellen, in welchem Abstand das Kraut zur ersten Rotationsvorrichtung abgelegt wird.

Alternativ oder zusätzlich ist das Umlenkelement zumindest anteilig, insbesondere ausschließlich, um eine zur Schnittebene angewinkelte Umlenkschwenkachse schwenkbar angeordnet. Die Umlenkschwenkachse verläuft insbesondere rechtwinklig zur Schnittebene bzw. vertikal und/oder ist in einer Draufsicht auf Krauttrennvorrichtung bevorzugt vor zumindest einem überwiegenden Teil des Umlenkelementes angeordnet. Hierdurch lässt sich die Auswurfrichtung variieren und dadurch wiederum einfach einstellen, in welchem Abstand das Kraut zur ersten Rotationsvorrichtung abgelegt wird.

Bevorzugt ist das Umlenkelement um die Umlenkschwenkachse aus einer ersten Stellung um zumindest 20° und/oder höchstens 35° nach außen in eine zweite Stellung schwenkbar. Die Verschwenkung nach außen mit insbesondere eine Vergrößerung des Abstandes zumindest eines überwiegenden Teils des Umlenkelementes von der ersten Rotationsachse. In der ersten Stellung erstreckt sich das Umlenkelement bevorzugt flächig parallel zu einer Längsmittelebene, die parallel zur Fahrtrichtung angeordnet ist. Dadurch lassen sich sämtliche für die Anwendung der Krauttrennvorrichtung in Speisezwiebelbeständen relevanten Auswurfrichtungen einstellen, ohne dass dazu ein komplexer Aufbau des Umlenkkanals nötig ist.

Erfindungsgemäß ist die Rotationsachsenebene, in der die Rotationsachsen sämtlicher Rotationsvorrichtungen parallel verlaufen, im Betrieb zu einer vertikalen und zur Fahrtrichtung parallelen Längsmittelebene um < 90° angewinkelt angeordnet. Bevorzugt ist die Rotationsachsenebene im Betrieb zur Längsmittelebene um < 70° angewinkelt angeordnet. Die Rotationsachsen sind somit sowohl in Fahrtrichtung als auch in eine zur Fahrtrichtung orthogonale, horizontale Querrichtung voneinander beabstandet. Außerdem ist der Anstand benachbarter Rotationsachsen bevorzugt größer als die kumulierten Radien der darum rotierenden Rotationsvorrichtungen. Durch diese Merkmale ist es zum einen möglich, die Rotationsvorrichtungen kraftschlüssig und damit schlupfbehaftet anzutreiben, ohne eine Kollision benachbarter Rotationsvorrichtungen zu riskieren. Außerdem ist durch die Anwinkelung der Rotationsachsenebene zur Längsmittelebene sichergestellt, dass in Fahrtrichtung betrachtet eine Überlappung der Bearbeitungsbreite benachbarter Rotationsvorrichtungen vorliegt und sämtliches Kraut der zu bearbeitenden Nutzpflanzen zuverlässig abgeführt werden kann. Die Abführrichtung verläuft bevorzugt parallel zur Rotationsachsenebene und anteilig entgegen der Fahrtrichtung. Die Rotationsvorrichtungen rotieren im Betrieb insbesondere derart, dass die Trennelemente innerhalb des Abführkanals anteilig in die Abführrichtung umlaufen. Durch diesen Aufbau wird eine energiesparende Abführung des Krauts ermöglicht.

Vorzugsweise umfasst die Krauttrennvorrichtung eine Verstelleinrichtung, die zu einer Verschwenkung der Krauttrennvorrichtung relativ zu einem Maschinenrahmen der Krauttrennvorrichtung aus seiner ersten Arbeitsposition in eine zweite Arbeitsposition ausgebildet ist. Bei der Verschwenkung wird insbesondere der Winkel zwischen der Rotationsachsenebene und der Längsmittelebene bevorzugt um zumindest 7° verändert. Durch diese Verschwenkung kann die Arbeitsbreite der Krauttrennvorrichtung variiert werden und die Krauttrennvorrichtung insbesondere bei einer zusätzlichen Höhenverstellung des seitlichen Umlenkelementes bei unterschiedlich breiten Nutzpflanzenbahnen eingesetzt werden. In der ersten Arbeitsposition beträgt der Winkel zwischen der Rotationsachsenebene und der Längsmittelebene bevorzugt 24°, in der zweiten Arbeitsposition beträgt der Winkel bevorzugt 31°.

Die unterschiedlichen, vorbeschriebenen Leitelemente sind jeweils bevorzugt als insbesondere metallisches Leitblech ausgebildet. Dabei sind bevorzugt beide Hauptoberflächen des jeweiligen Leitelementes eben und parallel zueinander, wobei ihr Abstand maximal 10 mm beträgt. Mit Ausnahme der Rotationsvorrichtungen sind im Betrieb vorzugsweise sämtliche Teile der Krauttrennvorrichtung ortsfest relativ zum Maschinenrahmen.

In einer bevorzugten Ausgestaltung umfasst die Krauttrennvorrichtung eine Mehrzahl von Abführkanälen, wobei jede Rotationsvorrichtung nur genau einem der Abführkanäle zugeordnet ist. Insbesondere verfügt die Krauttrennvorrichtung über eine Mehrzahl von Krauttrennvorrichtungsgliedern, die jeweils sämtliche Merkmale des Anspruchs 1 aufweisen und im Betrieb eine kumulierte Arbeitsbreite von > 3 m haben. Diese Krauttrennvorrichtungsglieder sind insbesondere am selben Maschinenrahmen angeordnet und für die Straßenfahrt relativ zueinander einklappbar.

Weitere Einzelheiten und Vorteile der Erfindung sind den nachfolgend beschriebenen, schematisch dargestellten Ausführungsbeispielen zu entnehmen; es zeigen:
- Fig. 1: eine erste perspektivische Darstellung eines ersten Ausführungsbeispiels der erfindungsgemäßen Krauttrennvorrichtung,
- Fig. 2: eine zweite perspektivische Darstellung des ersten Ausführungsbeispiels,
- Fig. 3: eine Darstellung des ersten Ausführungsbeispiels von unten,
- Fig. 4: eine dritte perspektivische Darstellung des ersten Ausführungsbeispiels,
- Fig. 5: die Fig. 1 entsprechende Darstellung in einer Nutzpflanzenkultur,
- Fig. 6: eine Seitenansicht des ersten Ausführungsbeispiels in der Nutzpflanzenkultur gemäß Fig. 5,
- Fig. 7: eine Schnittdarstellung des ersten Ausführungsbeispiels der Nutzpflanzenkultur gemäß Fig. 5,
- Fig. 8: eine Heckansicht des ersten Ausführungsbeispiels in der Nutzpflanzenkultur,
- Fig. 9: einen Längsschnitt des ersten Ausführungsbeispiels in der Nutzpflanzenkultur gemäß Fig. 5,
- Fig. 10: eine perspektivische Darstellung eines zweiten Ausführungsbeispiels der erfindungsgemäßen Krauttrennvorrichtung,
- Fig. 11: einen Längsschnitt eines dritten Ausführungsbeispiels der erfindungsgemäßen Krauttrennvorrichtung in der Nutzpflanzenkultur.

Sofern sinnvoll, sind funktional gleichwirkenden Teile mit identischen Bezugsziffern versehen.

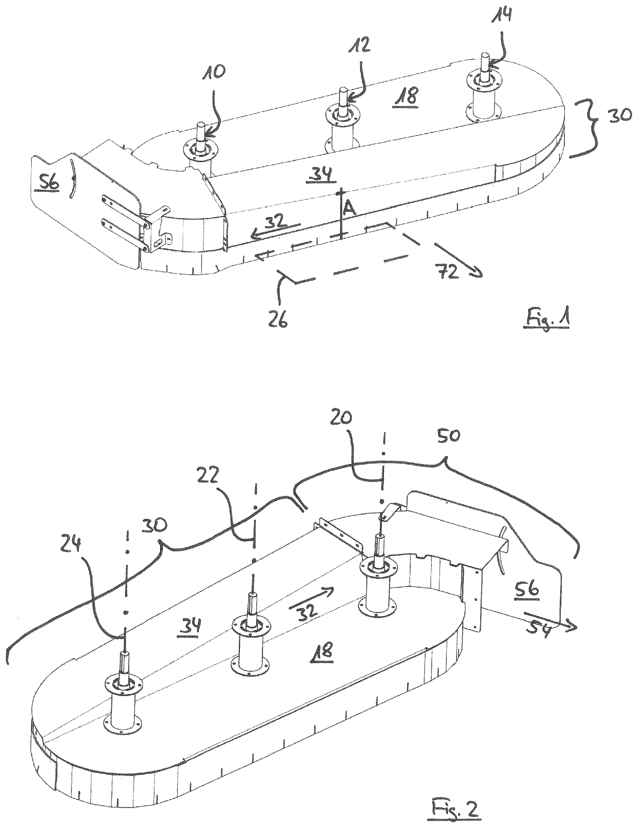

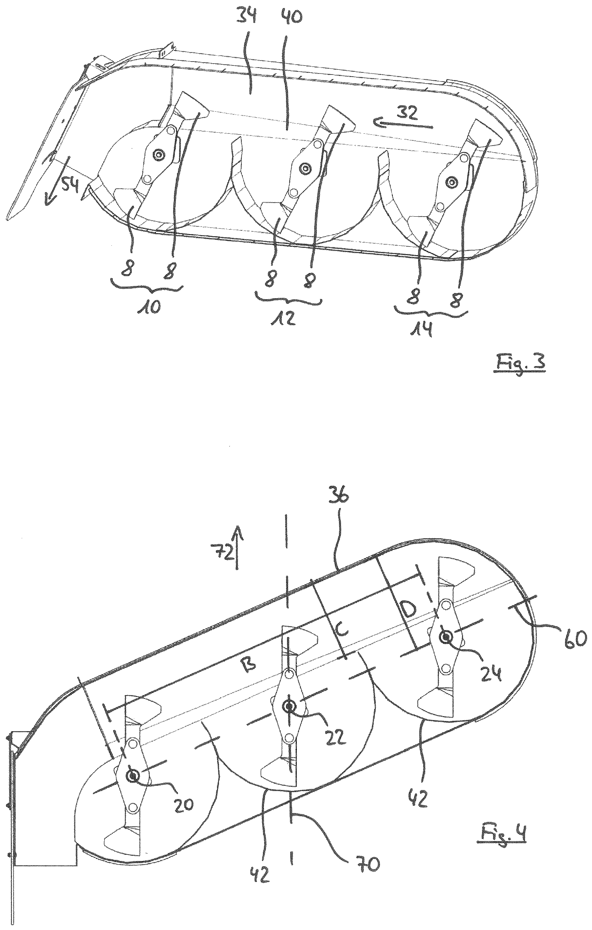

Das in den Figuren 1 bis 9 gezeigte erste Ausführungsbeispiel der erfindungsgemäßen Krauttrennvorrichtung 2 ist zum Abtrennen von Kraut 4 von Nutzpflanzen wie Speisezwiebeln 6 ausgebildet. Die Krauttrennvorrichtung 2 umfasst eine erste Rotationsvorrichtung 10, die zu einer Rotation um eine erste Rotationsachse 20 ausgebildet ist, eine zweite Rotationsvorrichtung 12, die zu einer Rotation um eine zweite Rotationsachse 22 ausgebildet ist, und eine dritte Rotationsvorrichtung 14, die zu einer Rotation um eine dritte Rotationsachse 24 ausgebildet ist. Die Rotationsachsen 20, 22, 24 sind dabei parallel zueinander und in einer Rotationsachsenebene 60 angeordnet (vgl. Fig. 4). Die Rotationsvorrichtungen 10, 12, 14 sind baugleich und weisen je zwei im Betrieb in einer zu den Rotationsachsen 20, 22, 24 orthogonalen Schnittebene 26 rotierende Trennelemente 8 auf.

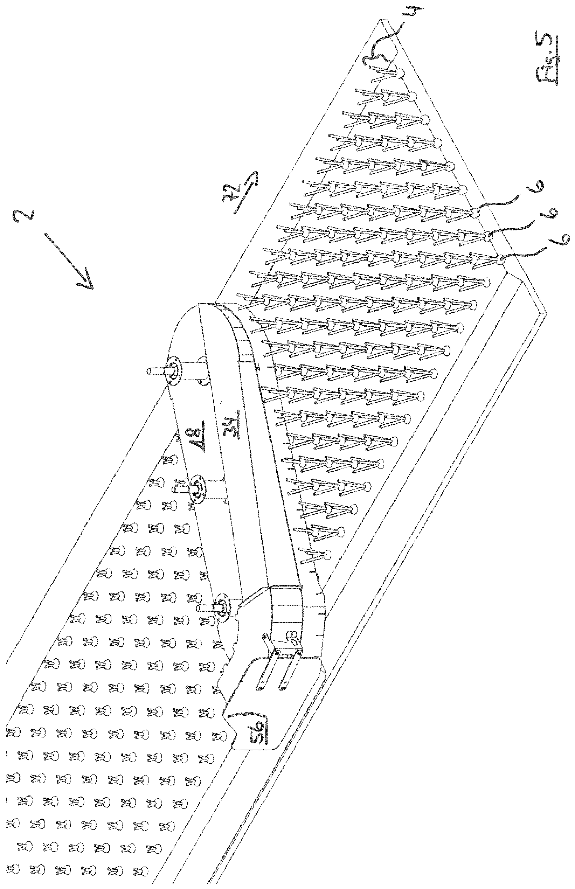

Die Krauttrennvorrichtung 2 umfasst einen sich an den Rotationsachsen 20, 22, 24 entlang in einer horizontale Abführrichtung 32 erstreckenden Abführkanal 30 (vgl. insbesondere Fig. 1 bis 4). Der Abführkanal 30 dient zur Abführung des durch die Trennelemente 8 geschnittenen Krauts 4. Der Abführkanal 30 ist durch eine Oberleitelement 34 nach oben hin begrenzt (vgl. auch Fig. 5).

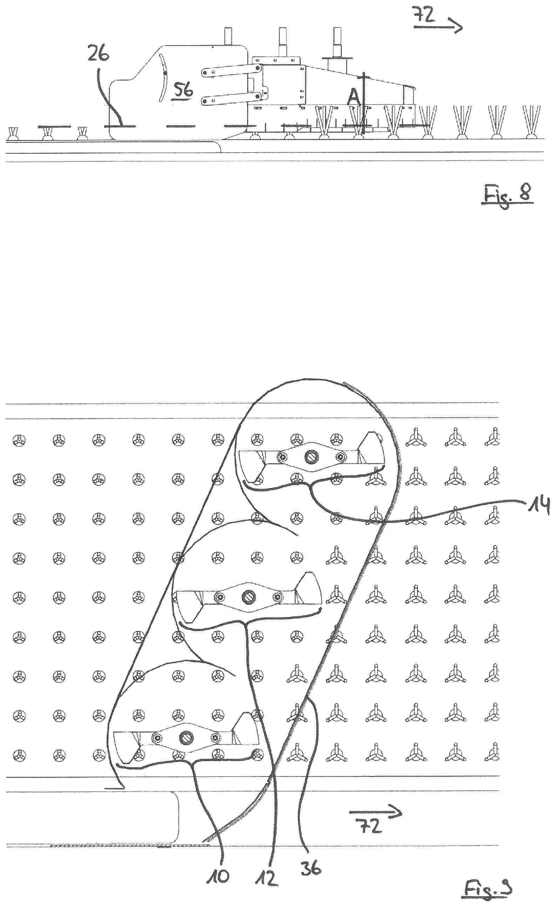

Der Abstand A des Oberleitelementes 34 von der Schnittebene 26 nimmt mit der Erstreckung des Abführkanals 30 in die Abführrichtung 32 linear zu (vgl. insbesondere Fig. 8 und 9). Der Abstand A nimmt dabei über eine Abführstrecke B, die dem Abstand der Rotationsachsen 20, 24 der äußersten Rotationsvorrichtungen 10, 14 entspricht, überschreitende Strecke ununterbrochen zu.

Eine Unterseite des Oberleitelementes 34 verläuft in die Abführrichtung 32 betrachtet über zumindest die Hälfte einer orthogonal zur Abführrichtung 32 und horizontal gemessenen Breite C (vgl. Fig. 3) des Abführkanals 30 gradlinig (vgl. Fig 9). Der Abführkanal 30 ist in einem in eine Fahrtrichtung 72 vorderen Bereich durch ein Frontleitelement 36 (vgl. Fig. 1) mit ausgebildet, dessen Abstand D von der Rotationsachsenebene konstant ist (vgl. Fig. 3).

Das erste Ausführungsbeispiel weist ein Abdeckelement 18 auf, das derart angeordnet ist, dass es die Rotationsachsen 20, 22, 24 der Rotationsvorrichtungen 10, 12, 14 vollständig umgibt. Das Abdeckelement 18 hat zur Schnittebene 26 einen geringeren Abstand als das gesamte Oberleitelement 34 (vgl. Fig. 9). Der Abstand eines Teils des Oberleitelementes 34, der von der Schnittebene 26 am weitesten beabstandet ist, ist um mehr als 500 mm weiter von der Schnittebene 26 beabstandet als das Abdeckelement 18.

Ein weiter als das Abdeckelement 18 von der Schnittebene 26 beabstandete Abführkanalteil 38 hat eine orthogonal zur Abführrichtung 32 und parallel zur Schnittebene 26 gemessene Breite C von mehr als 300 mm, welche über die Abführstrecke B konstant ist (vgl. Fig. 3). Über die gesamte Abführstrecke B ist zwischen dem Oberleitelement 34 und dem Abdeckelement 18 ein den Abführkanal 30 mitausbildendes Verbindungsleitelement 40 angeordnet, das sich sowohl zum Abdeckelement 18 als auch zur Schnittebene 26 um 80° angewinkelt erstreckt. Mit wachsender Höhe des Abführkanals wir das Oberleitelement 34 entsprechend schmaler (vgl. Fig. 3).

Den Rotationsvorrichtungen 10, 12, 14 ist jeweils eine Rotationsleitanordnung 42 zugeordnet, die sich zwischen dem Abdeckelement 18 und der Schnittebene 26 und darüber hinaus erstreckt. Die Rotationsleitanordnungen 42 erstrecken sich mit im Wesentlichen konstantem Abstand zur jeweiligen Rotationsachse 20, 22, 24 um ca. 180° um eben jene.

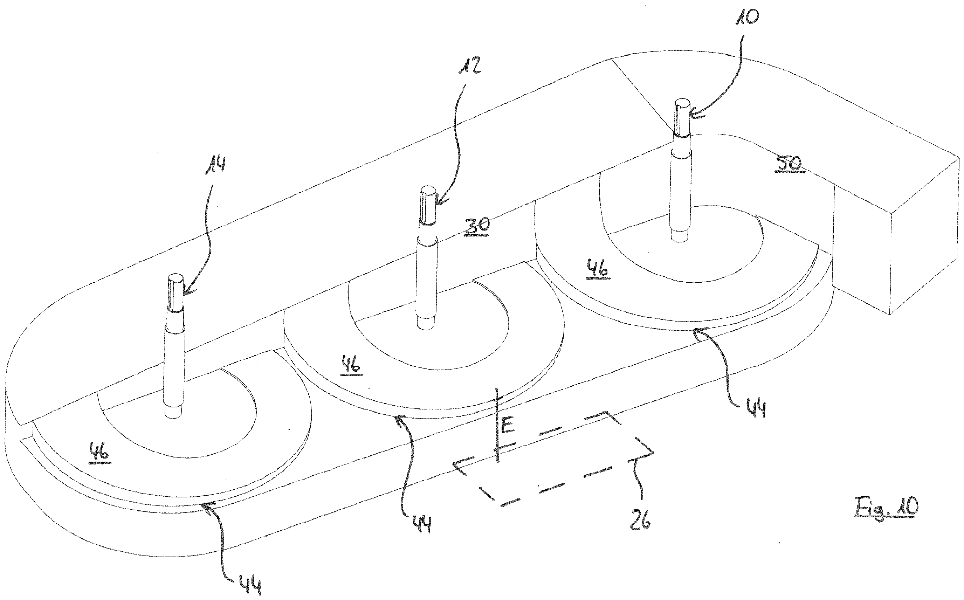

Fig. 10 offenbart ein zweites Ausführungsbeispiel der Krauttrennvorrichtung 2. In diesem Ausführungsbeispiel ist jeder der Rotationsvorrichtungen 10, 12, 14 ein in den Abführkanal 30 mündender Zuführkanal 44 zugeordnet. Die Zuführkanäle 44 sind durch ein Spiralleitelement 46 mitausgebildet, dass anteilig um die jeweilige Rotationsachse 20, 22, 24 der Rotationsvorrichtung 10, 12, 14 umläuft. Der Abstand E des Spiralleitelementes 46 von der Schnittebene 26 nimmt mit seiner Erstreckung zum Abführkanal 30 hin zu.

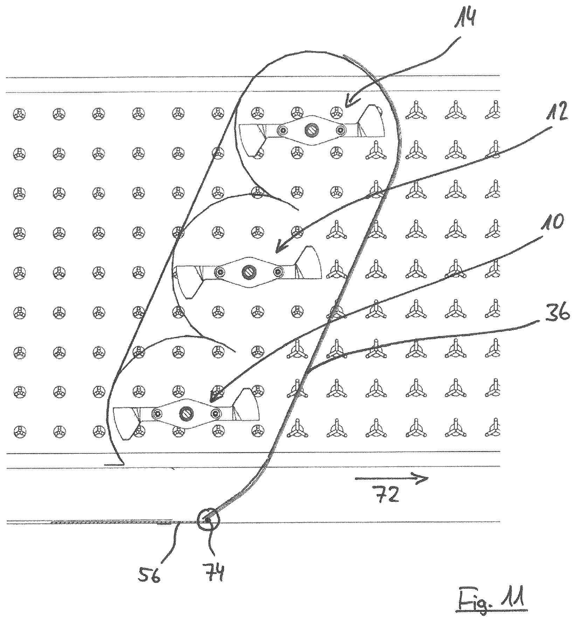

Beide Ausführungsbeispiele weisen einen sich an den Abführkanal 30 anschließenden und eine Auswurföffnung 52 umfassenden Umlenkkanal 50 auf (vgl. insbesondere Fig. 2 - 4), der in Fig. 10 nur schematisch dargestellt ist. Der Umlenkkanal 50 ist derart zur Umlenkung eines Kanalstroms ausgebildet, dass eine horizontale Auswurfrichtung 54 relativ zur Abführrichtung 32 um mehr als 55° angewinkelt ist. Der Umlenkkanal 50 ist auf einer von den Rotationsachsen 20, 22, 24 abgewandten Seite durch zumindest ein durch eine Parallelogrammführung höhenverstellbares Umlenkelement 56 mitausgebildet. Alternativ dazu ist der Umlenkkanal 50 in einem anderen Ausführungsbeispiel auf der von den Rotationsachsen 20, 22, 24 abgewandten Seite durch zumindest ein um eine vertikale Umlenkschwenkachse 74 schwenkbares Umlenkelement 56 mitausgebildet (in Fig. 11 schematisch dargestellt), wobei die Umlenkschwenkachse 74 anstelle der Parallelogrammführung im Bereich der in Fahrtrichtung 72 vorderen Kante des Umlenkelementes 56 angeordnet ist.

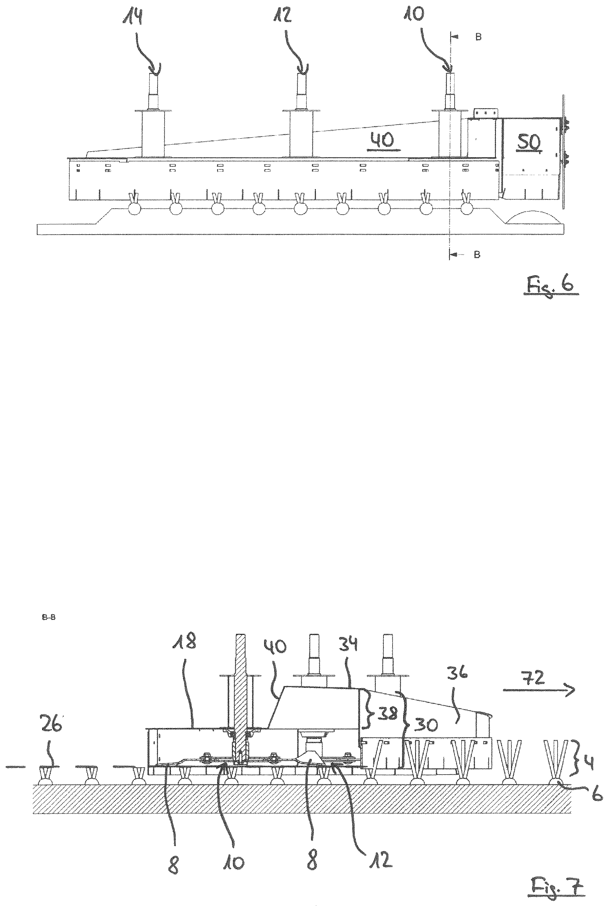

Im Betrieb ist die Rotationsachsenebene 60 zu einer vertikalen und zur Fahrtrichtung 72 parallelen Längsmittelebene 70 um < 70° angewinkelt angeordnet (vgl. Fig. 7).

Dabei haben benachbarte Rotationsachsen 20, 22 einen Abstand zueinander, der die Summe der Radien der jeweiligen Rotationsvorrichtungen 10, 12 übersteigt. So lassen sich die Rotationsvorrichtungen 10, 12, 14 durch ein kostengünstiges Riemengetriebe antreiben, ohne in die Fahrtrichtung 72 betrachtet auf eine Überlappung der Rotationsvorrichtungen 10, 12, 14 verzichten zu müssen.

Die Ausführungsbeispiele umfassen weiterhin eine nicht dargestellte Verstelleinrichtung, die zu einer Verschwenkung der Krauttrennvorrichtung 2 relativ zu einem nicht dargestellten Maschinenrahmen, mit welchem die Krauttrennvorrichtung 2 an die Zugmaschine koppelbar ist, aus einer ersten Arbeitsposition in eine zweite Arbeitsposition ausgebildet ist. Bei der Verschwenkung wird der Winkel zwischen der Rotationsachseneben 60 und der Längsmittelebene 70 um mindestens 7° verändert.

## Patentansprüche

1. Krauttrennvorrichtung (2) zum Abtrennen von Kraut (4) von Nutzpflanzen wie Speisezwiebeln (6), die zumindest eine erste Rotationsvorrichtung (10), die zu einer Rotation um eine erste Rotationsachse (20) ausgebildet ist und zumindest ein im Betrieb in einer zur ersten Rotationsachse (20) orthogonalen Schnittebene (26) rotierendes Trennelement (8) aufweist, zumindest eine zur ersten Rotationsvorrichtung (10) benachbart angeordnete zweite Rotationsvorrichtung (12), die zu einer Rotation um eine zweite Rotationsachse (22) ausgebildet ist und zumindest ein im Betrieb rotierendes Trennelement (8) aufweist, und einen sich an den Rotationsachsen (20, 22) entlang in eine horizontale Abführrichtung (32) erstreckenden Abführkanal (30) zur Abführung des Krauts (4) umfasst, der durch ein Oberleitelement (34) nach oben hin begrenzt ist, wobeider Abstand (A) des Oberleitelementes (34) von der Schnittebene (26) mit der Erstreckung des Abführkanals (30) in die Abführrichtung (32) zumindest abschnittsweise zunimmt, **dadurch gekennzeichnet, dass** eine Rotationsachsenebene (60), in der die Rotationsachsen (20,22,24) sämtlicher Rotationsvorrichtungen (10,12,14) verlaufen, im Betrieb zu einer vertikalen und zur Fahrtrichtung (72) parallelen Längsmittelebene (70) < 90° angewinkelt angeordnet ist.

2. Krauttrennvorrichtung nach Anspruch 1, **dadurch gekennzeichnet, dass** der Abstand (A) des Oberleitelementes (34) von der Schnittebene (26) zumindest über eine Abführstrecke (B), die dem Abstand der Rotationsachsen (20,24) der äußersten Rotationsvorrichtungen (10,14) entspricht, ununterbrochen zunimmt.

3. Krauttrennvorrichtung nach einem der vorhergehenden Ansprüche, **dadurch gekennzeichnet, dass** der Abstand (A) des Oberleitelements (34) von der Schnittebene (26) zumindest abschnittsweise, insbesondere über die gesamte Abführstrecke (B), zumindest im Wesentlichen linear zunimmt.

4. Krauttrennvorrichtung nach einem der vorhergehenden Ansprüche, **dadurch gekennzeichnet, dass** eine Unterseite des Oberleitelementes (34) in die Abführrichtung (32) betrachtet über zumindest die Hälfte einer orthogonal zur Abführrichtung (32) und horizontal gemessenen Breite (C) des Abführkanals (30) geradlinig, insbesondere parallel zur Schnittebene (26), verläuft.

5. Krauttrennvorrichtung nach einem der vorhergehenden Ansprüche, **dadurch gekennzeichnet, dass** der Abführkanal (30) in Fahrtrichtung durch ein Frontleitelement (36) begrenzt ist, dessen Abstand (D) von einer Rotationsachsenebene (60), in der die Rotationachsen (20,22,24) von zumindest zwei der Rotationsvorrichtungen (10,12,14) liegen, zumindest im Wesentlichen konstant ist.

6. Krauttrennvorrichtung nach einem der vorhergehenden Ansprüche, **gekennzeichnet durch** zumindest ein Abdeckelement (18), das derart angeordnet ist, dass es zumindest die Rotationsachse (20,22,24) einer Rotationsvorrichtung (10,12,14), insbesondere die Rotationsachsen (20,22,24) aller Rotationsvorrichtungen (10,12,14), schneidet oder zumindest abschnittsweise umgibt und dass es zur Schnittebene (26) einen geringeren Abstand hat als zumindest einem Teil des Oberleitelementes (34).

7. Krauttrennvorrichtung nach Anspruch 6, **dadurch gekennzeichnet, dass** der Abstand des Teils des Oberleitelementes (34) von der Schnittebene (26) um mindestens 200 mm, bevorzugt um mindestens 350 mm, besonders bevorzugt um mindestens 500 mm größer ist als der Abstand des Abdeckelementes (18) von der Schnittebene (26).

8. Krauttrennvorrichtung nach Anspruch 6 oder 7, **dadurch gekennzeichnet, dass** der Abführkanal (30), insbesondere ein weiter als das Abdeckelement (18) von der Schnittebene (26) beabstandeter Abführkanalteil (38), eine orthogonal zur Abführrichtung (32) und parallel zur Schnittebene (26) gemessene Breite (C) von mindestens 200 mm, bevorzugt von mindestens 250 mm, besonders bevorzugt von mindestens 300 mm hat.

9. Krauttrennvorrichtung nach einem der Ansprüche 6 bis 8, **dadurch gekennzeichnet, dass** die Breite (C) des Abführkanals (30) zumindest abschnittsweise, insbesondere des weiter als das Abdeckelement (18) von der Schnittebene (26) beabstandeten Abführkanalteils (38) und/oder über die gesamte Abführstrecke (B), zumindest im Wesentlichen konstant ist.

10. Krauttrennvorrichtung nach einem der Ansprüche 6 bis 9, **gekennzeichnet durch** ein insbesondere über die gesamte Abführstrecke (B) zwischen dem Oberleitelement (34) und dem Abdeckelement (18) angeordnetes und den Abführkanal (30) mit ausbildendes Verbindungsleitelement (40), das sich zumindest abschnittsweise um < 90°, bevorzugt zwischen 45° und 89°, besonders bevorzugt zwischen 70° und 85° angewinkelt zum Abdeckelement (18) und/oder zur Schnittebene (26) erstreckt.

11. Krauttrennvorrichtung nach einem der Ansprüche 6 bis 10, **dadurch gekennzeichnet, dass** zumindest einer der Rotationsvorrichtungen (10,12,14) eine zwischen dem Abdeckelement (18) und der Schnittebene (26) angeordnete und sich mit zumindest im Wesentlichen konstantem Abstand zur Rotationsachse (20,22,24) der Rotationsvorrichtung (10,12,14), insbesondere um zumindest 180°, um die Rotationsachse (20,22,24) erstreckende Rotationsleitanordnung (42) zugeordnet ist.

12. Krauttrennvorrichtung nach einem der vorhergehenden Ansprüche, **dadurch gekennzeichnet, dass** zumindest eine der Rotationsvorrichtungen (10,12,14) ein in den Abführkanal (30) mündender Zuführkanal (44) zugeordnet ist, der von einem zumindest anteilig um die Rotationsachse (20,22,24) der Rotationsvorrichtung (10,12,14) umlaufenden Spiralleitelement (46) zumindest mit ausgebildet ist, dessen Abstand (E) von der Schnittebene (26) zum Abführkanal (30) hin zumindest abschnittsweise zunimmt.

13. Krauttrennvorrichtung nach einem der vorhergehenden Ansprüche, **gekennzeichnet durch** einen sich an den Abführkanal (30) anschließenden und eine Auswurföffnung (52) aufweisenden Umlenkkanal (50), der derart zur Umlenkung eines Kanalstroms ausgebildet ist, dass eine horizontale Auswurfrichtung (54) relativ zur Abführrichtung (32) um zumindest 45°, bevorzugt um zumindest 55° angewinkelt ist.

14. Krauttrennvorrichtung nach Anspruch 13, **dadurch gekennzeichnet, dass** der Umlenkkanal (50) auf einer von den Rotationsachsen (20,22,24) abgewandten Seite durch zumindest ein höhenverstellbares Umlenkelement (56) zumindest mit ausgebildet ist.

15. Krauttrennvorrichtung nach Anspruch 13 oder 14, **dadurch gekennzeichnet dass** der Umlenkkanal (50) auf einer/der von den Rotationsachsen (20,22,24) abgewandten Seite durch zumindest ein/das Umlenkelement (56) zumindest mit ausgebildet ist, das zumindest anteilig parallel zur Schnittebene (26) verschieblich und/oder um eine zur Schnittebene (26) angewinkelte, insbesondere rechtwinklige, Umlenkschwenkachse (74) schwenkbar angeordnet ist.

16. Krauttrennvorrichtung nach Anspruch 15, **dadurch gekennzeichnet, dass** das Umlenkelement (56) um die insbesondere zumindest im Wesentlichen zur Schnittebene (26) rechtwinklige Umlenkschwenkachse (74) aus einer ersten Stellung, in der sich das Umlenkelement bevorzugt flächig parallel zu einer zur Fahrtrichtung (72) parallelen Längsmittelebene (70) erstreckt, um zumindest 20° und/oder höchstens 35° nach außen in eine zweite Stellung schwenkbar angeordnet ist.

17. Krauttrennvorrichtung nach einem der vorhergehenden Ansprüche, **gekennzeichnet durch** eine Verstelleinrichtung, die zu einer Verschwenkung der Krauttrennvorrichtung (2) relativ zu einem Maschinenrahmen aus einer ersten Arbeitsposition in eine zweite Arbeitsposition derart ausgebildet ist, dass dabei der Winkel zwischen der Rotationsachsenebene (60) und der Längsmittelebene (70), insbesondere um zumindest 7°, verändert wird.

## Claims

1. Weed separation device (2) for separating haulm (4) from agricultural crops such as onions (6), which comprises at least a first rotation device (10) which is configured for rotation about a first axis of rotation (20) and has at least one separating element (8) rotating during operation in a cutting plane (26) orthogonal to the first axis of rotation (20), at least a second rotation device (12) which is arranged adjacent the first rotation device (10), is configured for rotation about a second axis of rotation (22) and has at least one separating element (8) rotating during operation, and a discharge channel (30) for discharging the haulm (4) which extends along at the axes of rotation (20, 22) into a horizontal discharge direction (32) and which is delimited at the top by an upper guide element (34), wherein the distance (A) of the upper guide element (34) from the cutting plane (26) increases at least in sections with the extent of the discharge channel (30) into the discharge direction (32), **characterized in that** a plane (60) of axes of rotation in which the axes of rotation (20, 22, 24) of all of the rotation devices (10, 12, 14) run, is arranged during operation at an angle < 90° to a vertical longitudinal centre plane (70) parallel to the direction of travel (72).

2. Weed separation device according to Claim 1 **characterized in that** the distance (A) of the upper guide element (34) from the cutting plane (26) increases uninterrupted at least over a discharge path (B) which corresponds to the distance of the axes of rotation (20, 24) of the outermost rotation devices (10, 14).

3. Weed separation device according to one of the preceding claims **characterized in that** the distance (A) of the upper guide element (34) from the cutting plane (26) increases at least substantially linearly at least in some sections, in particular over the entire discharge path (B).

4. Weed separation device according to one of the preceding claims **characterized in that** an underneath side of the upper guide element (34), as viewed in the discharge direction (32), runs in a straight line, parallel to the cutting plane (26), over at least half of a width (C) of the discharge channel (30) measured horizontally and orthogonally to the discharge direction (32).

5. Weed separation device according to one of the preceding claims **characterized in that** the discharge channel (30) is delimited in the direction of travel by a front guide element (36) whose distance (D) from a plane (60) of the axes of rotation in which the axes of rotation (20, 22, 24) of at least two of the rotation devices (10, 12, 14) lie, is at least substantially constant.

6. Weed separation device according to one of the preceding claims **characterized by** at least one cover element (18) which is arranged so that it intersects or surrounds at least in some sections, at least the axis of rotation (20, 22, 24) of a rotation device (10, 12, 14), in particular the axes of rotation (20, 22, 24) of all the rotation devices (10, 12, 14) and that it has a shorter distance from the cutting plane (26) than at least a part of the upper guide element (34).

7. Weed separation device according to Claim 6 **characterized in that** the distance of the part of the upper guide element (34) from the cutting plane (26) is greater by at least 200 mm, preferably by at least 350 mm, particularly preferably by at least 500 mm, than the distance of the cover element (18) from the cutting plane (26).

8. Weed separation device according to Claim 6 or 7 **characterized in that** the discharge channel (30), in particular a discharge channel part (38) spaced further than the cover element (18) from the cutting plane (26), has a width (C) of at least 200 mm, preferably of at least 250 mm, particularly preferably of at least 300 mm, measured orthogonally to the discharge direction (32) and parallel to the cutting plane (26).

9. Weed separation device according to one of Claims 6 to 8 **characterized in that** the width (C) of the discharge channel (30) at least in some sections, in particular of the discharge channel part (38) spaced further than the cover element (18) from the cutting plane (26) and/or over the entire discharge path (B) is at least substantially constant.

10. Weed separation device according to one of Claims 6 to 9 **characterized by** a connecting guide element (40) arranged in particular over the entire discharge path (B) between the upper guide element (34) and the cover element (18), and also forming the discharge channel (30) and which extends at least in some sections angled by <90°, preferably between 45° and 89°, particularly preferably between 70° and 85° to the cover element (18) and/or to the cutting plane (26).

11. Weed separation device according to one of Claims 6 to 10 **characterized in that** at least one of the rotation devices (10, 12, 14) is assigned a rotation guide arrangement (42) which is arranged between the cover element (18) and the cutting plane (26) and which extends at at least a substantially constant distance to the axis of rotation (20, 22, 24) of the rotation device (10, 12, 14), in particular around at least 180° around the axis of rotation (20, 22, 24).

12. Weed separation device according to one of the preceding claims **characterized in that** at least one of the rotation devices (10, 12, 14) is assigned a supply channel (44) which opens into the discharge channel (30) and which is at least also formed by a spiral guide element (46) revolving at least in part about the axis of rotation (20, 22, 24) of the rotation device (10, 12, 14), with the distance (E) of the spiral guide element increasing at least in some sections from the cutting plane (26) to the discharge channel (30).

13. Weed separation device according to one of the preceding claims **characterized by** a deflection channel (50) adjoining the discharge channel (30) and having an ejection opening (52) wherein the deflection channel is configured for deflecting a channel flow so that a horizontal ejection direction (54) is angled by at least 45°, preferably by at least 55° relative to the discharge direction (32).

14. Weed separation device according to Claim 13 **characterized in that** the deflection channel (50) is at least also formed on a side facing away from the axes of rotation (20, 22, 24) by at least one height-adjustable deflection element (56).

15. Weed separation device according to Claim 13 or 14 **characterized in that** the deflection channel (50) is configured on a/the side facing away from the axes of rotation (20, 22, 24) by at least one/the deflection element (56) which is arranged displaceable at least in part parallel to the cutting plane (26) and/or for pivotal movement about a deflection pivot axis (74) which is angled, in particular at right angles, to the cutting plane (26).

16. Weed separation device according to Claim 15 **characterized in that** the deflection element (56) is arranged for pivotal movement about at least 20° and/or 35° maximum about the deflection pivot axis (74) in particular at least substantially at right angles to the cutting plane (26), from a first position in which the deflection element extends preferably flat parallel to a longitudinal centre plane (70) parallel to the direction of travel (72), outwards into a second position.

17. Weed separation device according to one of the preceding claims **characterized by** an adjusting device which is configured for pivoting the weed separation device (2) relative to a machine frame from a first working position into a second working position so that the angle between the plane (60) of the axes of rotation and the longitudinal centre plane (70) is changed by at least 7°.

## Revendications

1. Dispositif de séparation de fanes (2) servant à la séparation de fanes (4) de plantes utiles telles que des oignons (6), lequel présente au moins un premier dispositif de rotation (10) qui est réalisé pour une rotation autour d'un premier axe de rotation (20) et au moins un élément de séparation (8) tournant, lors du fonctionnement, dans un plan de coupe (26) orthogonal au premier axe de rotation (20), présente au moins un deuxième dispositif de rotation (12) disposé de manière adjacente au premier dispositif de rotation (10), lequel deuxième dispositif de rotation est réalisé pour une rotation autour d'un deuxième axe de rotation (22) et présente au moins un élément de séparation (8) tournant lors du fonctionnement, et comprend un canal d'évacuation (30) s'étendant dans une direction d'évacuation (32) horizontale le long des axes de rotation (20, 22), lequel canal d'évacuation sert à l'évacuation des fanes (4), et est limité vers le haut par un élément de guidage supérieur (34), la distance (A) de l'élément de guidage supérieur (34) au plan de coupe (26) augmentant au moins dans certaines régions dans la direction d'évacuation (32) avec l'étendue du canal d'évacuation (30),
**caractérisé en ce qu'**un plan d'axes de rotation (60), dans lequel les axes de rotation (20, 22, 24) de tous les dispositifs de rotation (10, 12, 14) s'étendent, est disposé de manière inclinée de < 90° par rapport à un plan médian longitudinal (70) vertical et parallèle à la direction de conduite (72) lors du fonctionnement.

2. Dispositif de séparation de fanes selon la revendication 1, **caractérisé en ce que** la distance (A) de l'élément de guidage supérieur (34) au plan de coupe (26) augmente de manière ininterrompue au moins sur un trajet d'évacuation (B) qui correspond à la distance entre les axes de rotation (20, 24) des dispositifs de rotation (10, 14) les plus à l'extérieur.

3. Dispositif de séparation de fanes selon l'une des revendications précédentes, **caractérisé en ce que** la distance (A) de l'élément de guidage supérieur (34) au plan de coupe (26) augmente de manière au moins sensiblement linéaire au moins dans certaines régions, en particulier sur tout le trajet d'évacuation (B).

4. Dispositif de séparation de fanes selon l'une des revendications précédentes, **caractérisé en ce qu'**un côté inférieur de l'élément de guidage supérieur (34), considéré dans la direction d'évacuation (32), s'étend de manière rectiligne, en particulier parallèlement au plan de coupe (26), sur au moins la moitié d'une largeur (C), mesurée orthogonalement à la direction d'évacuation (32) et horizontalement, du canal d'évacuation (30).

5. Dispositif de séparation de fanes selon l'une des revendications précédentes, **caractérisé en ce que** le canal d'évacuation (30) est limité, dans la direction de conduite, par un élément de guidage avant (36) dont la distance (D) à un plan d'axes de rotation (60), dans lequel se situent les axes de rotation (20, 22, 24) d'au moins deux des dispositifs de rotation (10, 12, 14), est au moins sensiblement constante.

6. Dispositif de séparation de fanes selon l'une des revendications précédentes, **caractérisé par** au moins un élément de recouvrement (18) qui est disposé de telle sorte qu'il croise ou entoure au moins dans certaines régions au moins l'axe de rotation (20, 22, 24) d'un dispositif de rotation (10, 12, 14), en particulier les axes de rotation (20, 22, 24) de tous les dispositifs de rotation (10, 12, 14), et en ce qu'il a une plus faible distance au plan de coupe (26) qu'au moins une partie de l'élément de guidage supérieur (34).

7. Dispositif de séparation de fanes selon la revendication 6, **caractérisé en ce que** la distance de la partie de l'élément de guidage supérieur (34) au plan de coupe (26) est supérieure d'au moins 200 mm, de préférence d'au moins 350 mm, de manière particulièrement préférée d'au moins 500 mm à la distance de l'élément de recouvrement (18) au plan de coupe (26).

8. Dispositif de séparation de fanes selon la revendication 6 ou 7, **caractérisé en ce que** le canal d'évacuation (30), en particulier une partie de canal d'évacuation (38) espacée du plan de coupe (26) davantage que l'élément de recouvrement (18), a une largeur (C), mesurée orthogonalement à la direction d'évacuation (32) et parallèlement au plan de coupe (26), d'au moins 200 mm, de préférence d'au moins 250 mm, de manière particulièrement préférée d'au moins 300 mm.

9. Dispositif de séparation de fanes selon l'une des revendications 6 à 8, **caractérisé en ce que** la largeur (C) du canal d'évacuation (30), en particulier de la partie de canal d'évacuation (38) espacée du plan de coupe (26) davantage que l'élément de recouvrement (18) et/ou sur tout le trajet d'évacuation (B), est au moins sensiblement constante au moins dans certaines régions.

10. Dispositif de séparation de fanes selon l'une des revendications 6 à 9, **caractérisé par** un élément de guidage de liaison (40) disposé en particulier sur tout le trajet d'évacuation (B) entre l'élément de guidage supérieur (34) et l'élément de recouvrement (18) et formant le canal d'évacuation (30), lequel élément de guidage de liaison s'étend au moins dans certaines régions de manière inclinée de < 90°, de préférence entre 45° et 89°, de manière particulièrement préférée entre 70° et 85° par rapport à l'élément de recouvrement (18) et/ou au plan de coupe (26).

11. Dispositif de séparation de fanes selon l'une des revendications 6 à 10, **caractérisé en ce qu'**un agencement de guidage de rotation (42) disposé entre l'élément de recouvrement (18) et le plan de coupe (26) et s'étendant à une distance au moins sensiblement constante de l'axe de rotation (20, 22, 24) du dispositif de rotation (10, 12, 14), en particulier sur au moins 180°, autour de l'axe de rotation (20, 22, 24) est associé à au moins l'un des dispositifs de rotation (10, 12, 14).

12. Dispositif de séparation de fanes selon l'une des revendications précédentes, **caractérisé en ce qu'**un canal d'alimentation (44) débouchant dans le canal d'évacuation (30) est associé à au moins l'un des dispositifs de rotation (10, 12, 14), lequel canal d'alimentation est au moins formé par un élément de guidage en spirale (46) périphérique au moins en partie autour de l'axe de rotation (20, 22, 24) du dispositif de rotation (10, 12, 14), élément de guidage en spirale dont la distance (E) au plan de coupe (26) augmente au moins dans certaines régions vers le canal d'évacuation (30).

13. Dispositif de séparation de fanes selon l'une des revendications précédentes, **caractérisé par** un canal de déviation (50) se raccordant au canal d'évacuation (30) et présentant une ouverture d'éjection (52), lequel canal de déviation est réalisé pour la déviation d'un flux de canal, de telle sorte qu'une direction d'éjection (54) horizontale est inclinée d'au moins 45°, de préférence d'au moins 55° par rapport à la direction d'évacuation (32) .

14. Dispositif de séparation de fanes selon la revendication 13, **caractérisé en ce que** le canal de déviation (50) est au moins formé par au moins un élément de déviation (56) réglable en hauteur sur un côté opposé aux axes de rotation (20, 22, 24).

15. Dispositif de séparation de fanes selon la revendication 13 ou 14, **caractérisé en ce que** le canal de déviation (50) est au moins formé par au moins un/l'élément de déviation (56) sur un/le côté opposé aux axes de rotation (20, 22, 24), lequel élément de déviation est disposé de manière mobile au moins en partie parallèlement au plan de coupe (26) et/ou de manière pivotante autour d'un axe de pivotement de déviation (74) incliné, en particulier perpendiculaire, par rapport au plan de coupe (26).

16. Dispositif de séparation de fanes selon la revendication 15, **caractérisé en ce que** l'élément de déviation (56) est disposé de manière pivotante autour de l'axe de pivotement de déviation (74) perpendiculaire en particulier au moins sensiblement au plan de coupe (26) à partir d'une première position, dans laquelle l'élément de déviation s'étend de préférence à plat parallèlement à un plan médian longitudinal (70) parallèle à la direction de conduite (72), sur au moins 20° et/ou au plus 35° vers l'extérieur dans une deuxième position.

17. Dispositif de séparation de fanes selon l'une des revendications précédentes, **caractérisé par** un dispositif de réglage qui est réalisé pour un pivotement du dispositif de séparation de fanes (2) par rapport à un bâti de machine à partir d'une première position de travail dans une deuxième position de travail, de telle sorte qu'en l'occurrence l'angle entre le plan d'axes de rotation (60) et le plan médian longitudinal (70) soit modifié en particulier d'au moins 7°.
